# EUROPEAN PATENT APPLICATION

(11) **EP 2 071 933 A1**
(43) Date of publication of application: **24.06.2009**
(21) Application number: 08170657.4
(22) Date of filing: 04.12.2008
(51) Int. Cl.: A01B 63/10

(54) **Rockshaft Assembly**

(30) Priority: 21.12.2007 US 962185
(71) Applicant: Deere & Company, Moline, IL 61265-8098 (US)
(72) Inventor: Fox, Jason L., Appling, GA 30802 (US); Evans, Mark D., Grovetown, GA 30813 (US)
(74) Representative: Löser, Iris

(57) **Abstract**

A rockshaft assembly (100) includes a support casting (102) having a pair of journeyed bearings supporting a rockshaft (114) for a three point hitch. A piston (110) is connected to a crank (112) on the rockshaft (114) , and a detachable hydraulic lift cylinder (104) is inserted through an opening (107) in the support casting (102). The detachable hydraulic lift cylinder (104) has a bore (106) partially inside the support casting (102) and partially outside the casting (102) in which the piston (104) moves.

## Description

This invention relates generally to hitches for tractors or other work vehicles, and more specifically to rockshaft assemblies for rear mounted three point hitches.

For lifting, lowering and applying down pressure to implements hitched to tractors or other work vehicles, a three point hitch may be mounted on the rear of the tractor. The hitch includes a rockshaft assembly with one or more hydraulic lift cylinders connected to the rockshaft, and a pair of lower draft links for mounting and pulling the implement. Additionally, the hitch may include a third or upper link that cooperates with the rockshaft assembly and lower draft links to maintain the desired orientation of the implement.

The rockshaft assembly typically has a rockshaft splined to receive a pair of rocker arms or lift arms, and also a bell crank or lever for rotating the rockshaft in response to extension and retraction of a piston in the hydraulic lift cylinder. The rockshaft may be supported on journalled bearings either inboard or outboard of the rocker arms. The journalled bearings are typically provided in a large support casting in the form of a housing mounted and secured to the upper, rear or side surfaces of the tractor's differential housing.

To rotate the rockshaft for raising and lowering the implement, a single lift cylinder or a pair of lift cylinders may be used. If a single lift cylinder is used, the cylinder is generally located within the differential housing and cooperates with a central bell crank or lever splined to the rockshaft. If two lift cylinders are used, the cylinders are typically external to the differential housing and are mounted on either side of the tractor's rear differential. In either case, lift links connect the rocker arms to the draft links so that an implement may be raised and lowered by rotating the rockshaft and rocker arms.

Difficulties may be encountered when servicing components of the rockshaft assembly and lift cylinders. For example, routine servicing of lift cylinders located within the rear differential housing, such as replacement of worn seals, requires removal of the hitch support casting and partial dismantling of the differential. As a result, such repairs are costly and time intensive. Additionally, rebuilding or changing out the lift cylinder to increase lift capacity of the hitch is complicated and expensive. A rockshaft assembly is needed that simplifies and improves serviceability, and that allows easy removal and replacement of the hydraulic lift cylinder.

Another disadvantage of conventional rockshaft assemblies is their relatively large size and weight. For example, a typical hitch support casting has a weight of 20 kg or more. The hitch support casting has sufficient size and volume to enclose the lift cylinder and crank, and also has sufficient mass to support a typical rated lift capacity of at least 500 kg, which under industry standards is measured at a location two feet behind the lower draft link hitch balls. The substantial size and weight of the hitch support casting is disadvantageous due to material cost, and also due to the increased difficulty removing and replacing the casting during assembly or servicing. Accordingly, there is a need for a hitch support casting that is smaller and lighter in weight for a rockshaft assembly providing a rated lift capacity of at least 500 kg.

It is therefore the object of the present invention to comply with this need.

This object is met according to the invention by the teaching of claim 1, while features developing the solution in an advantageous manner are set forth in the further claims.

A rockshaft assembly with a detachable hydraulic lift cylinder is provided for a three point hitch. The rockshaft assembly includes a support casting having a pair of journeyed bearings, a rockshaft rotatably mounted to the journeyed bearings, a crank attached to the rockshaft, and a piston attached to a rod pivotably connected to the crank. A detachable hydraulic lift cylinder is externally mounted to the support casting and has a bore in which the piston moves. A port in the cylinder is provided for introduction of hydraulic fluid into the bore to act against the piston. The detachable hydraulic lift cylinder extends through an opening in the support casting, and can easily be removed for servicing. The support casting is light in weight, smaller in size, but can provide a rated lift capacity in excess of 500 kg.

In a second embodiment a rockshaft assembly may comprise a rockshaft extending through a support casting mounted to a differential housing; a hydraulic lift cylinder attached to the support casting and having an internal bore, and a piston in the bore connected to a crank on the shaft, the piston moving to turn the rockshaft between a raised position and a lowered position; the hydraulic lift cylinder being detachable mounted to the support casting such that a first end of the cylinder is outside the support casting and a second end of the cylinder is inside the cylinder.

The rockshaft assembly may further comprise a pair of lift arms mounted to the rockshaft.

The second end of the hydraulic lift cylinder may extend through a circular opening in the support casting.

The rated lift capacity of the rockshaft assembly may be at least 40 times the weight of the support casting.

In another embodiment a rockshaft assembly may comprise a support casting having a pair of journeyed bearings supporting a rockshaft for a three point hitch; a piston connected to a crank on the rockshaft; and a detachable hydraulic lift cylinder inserted through an opening in the support casting and having a bore partially inside the support casting and partially outside the casting in which the piston moves.

The rockshaft assembly may further compris e a port in the detachable hydraulic cylinder for introduction of hydraulic fluid.

The detachable hydraulic lift cylinder may have a flange mounted to the support casting at the opening.

An embodiment of the invention described below are shown in the drawings, in which
- Fig. 1: is a cross section view of a rockshaft assembly with a detachable hydraulic lift cylinder according to a first embodiment of the invention.
- Fig. 2: is a partially exploded perspective view of a rockshaft assembly with a detachable hydraulic lift cylinder according to a first embodiment of the invention.
- Fig. 3: is a perspective view of a three point hitch having a rockshaft assembly with a detachable hydraulic lift cylinder according to a first embodiment of the invention.

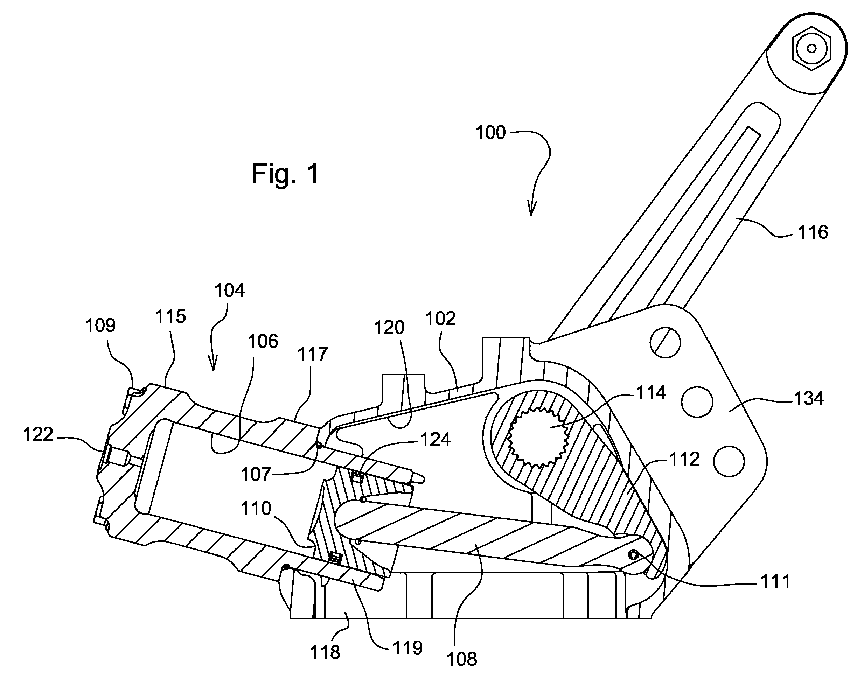

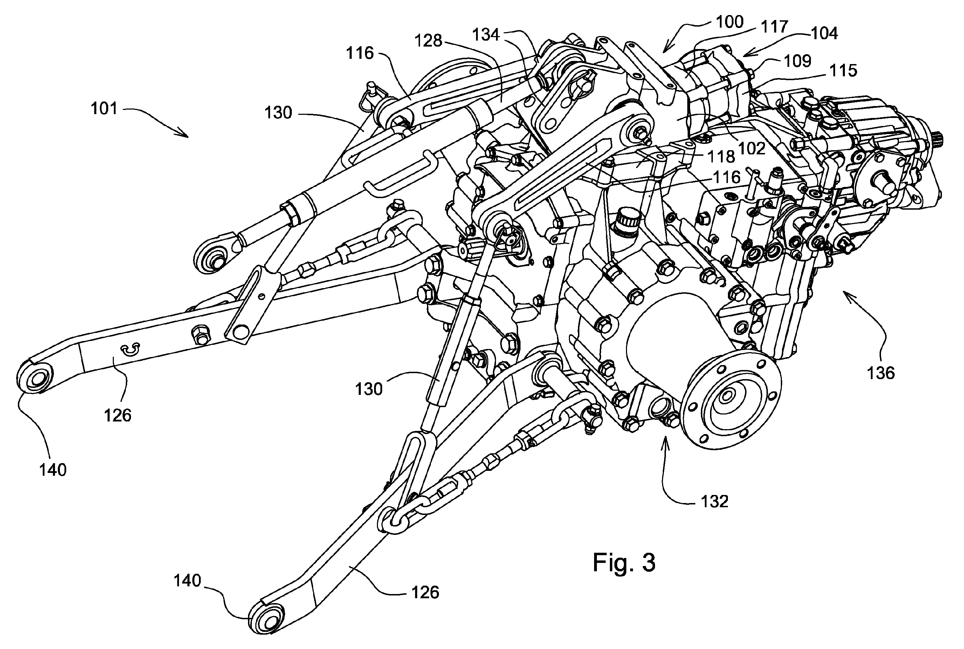

In a first embodiment shown in Figs. 1-3, rockshaft assembly 100 may be provided on an agricultural or utility tractor, and preferably on a rear mounted three point hitch 101. The rockshaft assembly may be adapted to fit on any three point hitch adapted to vertically displace a work implement. For example, in Fig. 3 rockshaft assembly 100 is shown mounted on the rear differential housing or rear transaxle 132 of a compact utility tractor.

The rockshaft assembly includes hitch support casting or housing 102. The hitch support casting or housing is a one piece structural casting, and may be mounted to the rear transaxle or differential assembly 132 using threaded fasteners inserted through mounting holes provided in mounting surface or base 118. The hitch support casting or housing also may include a pair of upright projections 134 for pivotably mounting upper draft arm 128.

In one embodiment, rockshaft 114 has opposing ends rotatably mounted by journalled bearings at the left and right sides of the hitch support casting or housing. Rocker arms or lift arms 116 may be mounted to splined portions of the rockshaft. Lower draft links 130 may be suspended between lift arms 116 and lower draft arms 126. Crank arm also is mounted on a splined portion of rockshaft 114. The interior of the hitch support casting or housing provides sufficient volume for crank arm 112 to pivot between a position where the rocker arms or lift arms 116 are fully raised as shown in Fig. 1, and a position where the rocker arms or lift arms are lowered, and any position between fully raised and lowered.

In one embodiment, detachable hydraulic lift cylinder 104 is externally mounted and fastened to the hitch support casting or housing with a plurality of threaded fasteners 109. The threaded fasteners may extend through a first flange 115 around the first end of the cylinder, and a second flange 117 intermediate the cylinder that abuts the support casting or housing 102 adjacent opening 107. The second end 119 of the detachable hydraulic lift cylinder may have a cylindrical shape that extends through opening 107 into the interior 120 of the hitch support casting or housing.

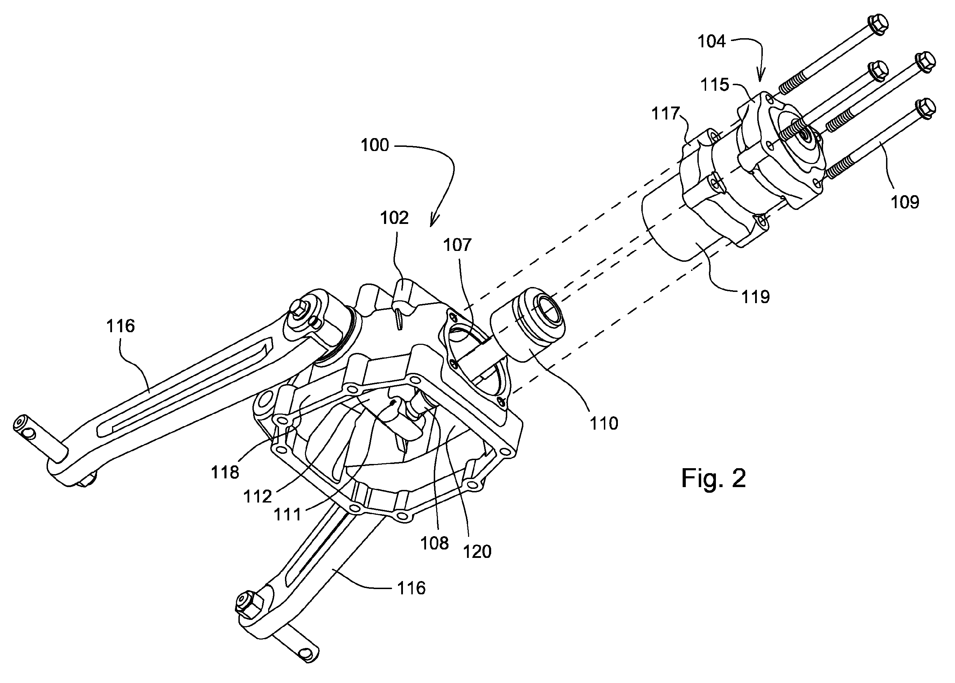

As shown in Fig. 2, detachable hydraulic lift cylinder 104 can be easily removed from the hitch support casting or housing for servicing and/or replacement by removing threaded fasteners 109. Once the detachable hydraulic lift cylinder is unfastened and removed from the hitch support casting or housing, access is provided to piston 110. Lift capacity can be easily changed by replacing the detachable hydraulic lift cylinder and piston with another cylinder and piston having different diameters. Thus, external mounting of the detachable hydraulic lift cylinder improves serviceability of the rockshaft assembly. The complete rockshaft can be rebuilt on the tractor without removing the hitch support casting or housing.

In one embodiment, detachable hydraulic lift cylinder 104 is partially outside or external to the hitch support casting or housing. The first end 115 of the hydraulic lift cylinder, which is outside the hitch support casting or housing, includes port 122 for introducing or withdrawing hydraulic fluid from the cylinder. In one embodiment, the detachable hydraulic lift cylinder 104 also is partially inside the hitch support casting or housing. Specifically, the second end 119 of the detachable hydraulic lift cylinder may extend through opening 107 at the front end of the hitch support casting or housing.

In one embodiment, bore 106 in the detachable hydraulic lift cylinder is located partially inside and partially outside the hitch support casting or housing. As a result, the stroke of piston 110, extends from the inside of the hitch support casting or housing to the outside of that structure. The rear of piston 110 is pivotably connected to a first end of rod 108. The second end of rod 108 is pivotably connected to crank arm 112. The crank arm is mounted on a splined portion of rockshaft 114, which has opposing ends rotatably mounted by journalled bearings at the left and right sides of the hitch support casting or housing.

In one embodiment, a hydraulic conduit (not shown) may be connected between cylinder port 122 and operator controlled valve 136 to control hydraulic pressure into the bore that applies force to move the piston. If the valve is turned to a first position, sufficient hydraulic force moves the piston toward the first end of the bore, as shown in Fig. 1, pivoting crank arm 112, turning rockshaft 114 on its longitudinal axis, and raising rocker arms or lift arms 116. If the valve is turned to a second position, hydraulic fluid is withdrawn from the bore, the piston moves toward the second end of the bore, and the rockshaft is turned in the opposite direction to lower the rocker arms or lift arms. The valve also may regulate the hydraulic fluid in the bore at one or more positions between the fully raised and fully lowered positions.

In one embodiment, the weight of the hitch support casting or housing is about 11.7 kg, and the rated lift capacity exceeds 500 kg when measured at a point two feet behind the lower draft link hitch balls 140. For example, the rated lift capacity of the rockshaft assembly with a detachable hydraulic lift cylinder having a 60 mm diameter bore hydraulic cylinder is 615 kg, and the rated lift capacity of a rockshaft assembly having a detachable hydraulic lift cylinder with a 56 mm bore is 525 kg. Thus, the ratio of the rated lift capacity to the weight of the hitch support casting or housing is at least 40. Thus, the externally mounted detachable hydraulic lift cylinder reduces the mass of the hitch support casting or housing.

Having described a preferred embodiment, it will become apparent that various modifications can be made without departing from the scope of the invention as defined in the accompanying claims.

## Claims

1. A rockshaft assembly (100) comprising a support casting (102) having a pair of journeyed bearings; a rockshaft (114) rotatably mounted to the journeyed bearings; a crank (112) attached to the rockshaft (114); a piston (110) attached to a rod (108) pivotably connected to the crank (112) ; **characterized by** a detachable hydraulic lift cylinder (104) externally mounted to the support casting (102) and having a bore (106) in which the piston (110) moves and having a port (122) for introduction of hydraulic fluid into the bore (106) to act against the piston (110).

2. The rockshaft assembly according to claim 1, **characterized in that** the detachable hydraulic lift cylinder (104) extends through an opening (107) in the support casting (102).

3. The rockshaft assembly according to claim 1 or 2, **characterized by** a pair of lower rocker arms (116) mounted to the rockshaft (114).

4. he rockshaft assembly according one or several of the previous claims, **characterized by** a pair of upright projections (134) extending from the support casting (102).

5. The rockshaft assembly according to claim 4, **characterized by** an upper draft link (130) pivotably attached to the pair of upright projections (134).

6. The rockshaft assembly according to one or several of the previous claims, **characterized in that** the detachable hydraulic lift cylinder (104) is partially inside the support casting (102) and partially outside the support casting (102).
